# EUROPEAN PATENT SPECIFICATION

(11) **EP 2 503 169 B1**
(45) Date of publication and mention of the grant of the patent: **09.01.2019**
(21) Application number: 10807579.7
(22) Date of filing: 19.11.2010
(51) Int. Cl.: F16C 33/64, F16C 19/18, F16C 33/58, F16C 33/40, F16C 43/06

(54) **TANDEM ANGULAR TYPE BALL BEARING**
TANDEM-SCHRÄGKUGELLAGER
ROULEMENT À BILLES DE TYPE ANGULAIRE EN TANDEM

(30) Priority: 20.11.2009 JP 2009265212; 20.11.2009 JP 2009264632
(43) Date of publication of application: 26.09.2012
(73) Proprietor: NSK Ltd., Tokyo 141-8560 (JP)
(72) Inventor: TANOUE, Yasushi, Fujisawa-shi Kanagawa 251-8501 (JP); TANAKA, Takanori, Fujisawa-shi Kanagawa 251-8501 (JP); MAEJIMA, Hiroki, Fujisawa-shi Kanagawa 251-8501 (JP); HAYASHI, Yoshitaka, Fujisawa-shi Kanagawa 251-8501 (JP); ABE, Kenichi, Fujisawa-shi Kanagawa 251-8501 (JP); YUKAWA, Kinji, Fujisawa-shi Kanagawa 251-8501 (JP); SAITO, Tomoharu, Fujisawa-shi Kanagawa 251-8501 (JP)
(74) Representative: Klingseisen, Franz
(86) International application number: PCT/JP2010/070667
(87) International publication number: WO 2011/062257

(56) References cited:
- EP-A1- 1 939 471
- WO-A1-85/03749
- WO-A2-2009/012763
- FR-A1- 2 669 692
- JP-A- 61 501 278
- JP-A- 2003 148 459
- JP-A- 2003 148 459
- JP-A- 2003 232 346
- JP-A- 2004 245 231
- JP-A- 2004 245 231
- JP-A- 2007 263 266
- JP-A- 2008 138 841
- JP-A- 2009 138 795
- JP-A- 2009 138 795
- JP-U- S6 154 519
- US-A1- 2008 205 811

## Description

### TECHNICAL FIELD

The present invention relates to a tandem angular ball bearing that is installed in rotating mechanical equipment such as a differential gear for an automobile or transfer equipment, and supports a rotating shaft that rotates in a state of a radial load and a thrust load being applied.

### RELATED ART

Various construction for supporting a pinion shaft of a differential gear for an automobile inside a differential casing such that it can rotate freely is widely known as disclosed in Patent Documents 1 to 6. During operation of a differential apparatus of an automobile, large radial loads and thrust loads are simultaneously applied to the pinion shaft, so it is necessary to use a bearing for supporting the pinion shaft that has sufficiently large load capacity in both the radial and thrust directions. Therefore, as disclosed in Patent Document 1 for example, a pair of back-to-back arrangement conical roller bearings is used, the directions of the contact angles thereof being different from each other, and these bearings support the pinion shaft inside the differential casing such that it can rotate freely.

It is well known in the field of rolling bearings, however, that in conical roller bearings, the load capacity is larger than in ball bearings, however, the dynamic torque (rotational resistance) also becomes large. Therefore, brought about by the move for lower fuel consumption of automobiles in recent years, it is proposed that angular ball bearings, which are capable of supporting loads in both the radial and thrust directions, be used as rolling bearings for supporting the pinion shaft with respect to the differential casing. The dynamic torque of angular ball bearings is less than that of conical roller bearings, so by changing the rolling bearing from supporting the pinion shaft from conical roller bearings to ball bearings, it is possible to lower the resistance of the differential gear.

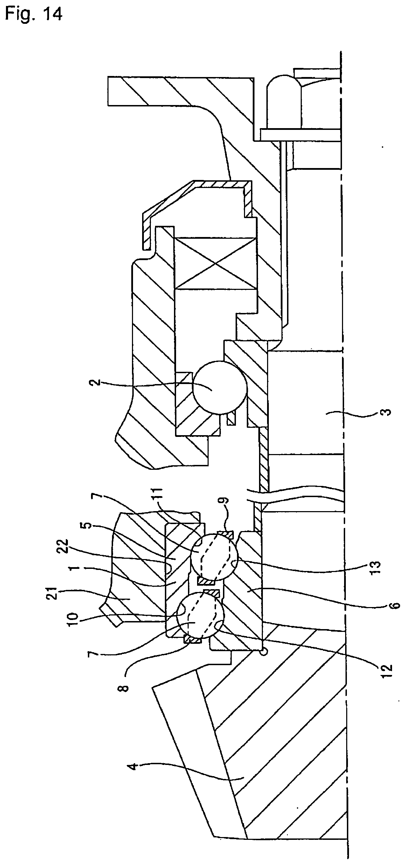

FIG. 14 illustrates an example of conventional construction of a rotation support apparatus for the pinion shaft of a differential gear that is constructed using angular ball bearings, as disclosed in Patent Document 1. The construction and function of the overall differential gear are well known, and are disclosed in Patent Documents 1 to 6, so figures and a detailed explanation are omitted, and only the construction of the rotation support apparatus portion is explained below. A pair of ball bearings 1, 2 is arranged inside the differential casing such that the bearings are separated from each other, and these ball bearings 1, 2 support the pinion shaft 3. These ball bearings 1, 2 are angular ball bearings, with each having a contact angle with the balls such that the directions of the contact angles of these ball bearings 1, 2 face in opposite directions from each other. Therefore, the pinion shaft 3 is rotatably supported inside the differential casing such that not only the radial load, but also the thrust loads in both directions are supported.

Of the ball bearings 1, 2, a tandem angular ball bearing is used as the ball bearing 1 on the pinion gear 4 side (left side in FIG. 14, hereafter referred to as the "pinion gear side"), and supports relatively large radial loads and thrust loads. On the other hand, a single row angular ball bearing is used as the ball bearing on the opposite side from the pinion gear 4 (right side in FIG. 14, hereafter referred to as the "non-pinion gear side"), and only supports relatively small radial loads and thrust loads. Construction in which tandem angular ball bearings are used on not just the pinion gear side by also on the non-pinion gear side is known as disclosed in Patent Documents 2 to 6. In addition to supporting radial loads, the ball bearing 1 on the pinion gear side supports thrust loads acting in the direction (toward the right in FIG. 14) going away from the ring gear (not illustrated in the figure) that engages with the pinion gear 4. On the other hand, the ball bearing 2 on the non-pinion gear side supports radial loads as well as thrust loads acting in the direction (toward the left in FIG. 14) going toward the ring gear.

In the case of this example, the ball bearing 1 that is on the pinion gear side is a tandem angular ball bearing, and comprises an outer ring 5, inner ring 6, a plurality of balls 7 and a pair of cages 8, 9. The outer ring 5 has a plurality of angular type outer ring raceways 10, 11 having different inner diameters formed around the inner peripheral surface. The inner diameters of both outer ring raceways 10, 11 are such that the inner diameter of the outer ring raceway 10 on the pinion gear side is large, and the inner diameter of the outer ring raceway 11 on the non-pinion gear side is small. The inner ring 6 is located on the inner-diameter side of the outer ring 5 such that it is concentric with the outer ring 5, and a plurality of angular type inner ring raceways 12, 13 are formed around the outer peripheral surface of the inner ring 6 in the portion that faces both outer ring raceways 10, 11, having different outer diameters. The outer diameters of the inner ring raceways 12, 13 are such that the outer diameter of the inner ring raceway 12 on the pinion gear side is large, and the outer diameter of the inner ring raceway 13 on the non-pinion gear side is small. Furthermore, the balls 7 are located between both outer ring raceways 10, 11 and both inner ring raceways 12, 13, with a plurality of balls 7 being located in each row, and the balls 7 rotate freely with a contact angle being applied in the same direction in both rows (in a tandem arrangement). The cages 8, 9 having different diameters, hold the balls 7 in both rows such that they rotate freely. The diameter of the balls 7 in both of these rows may be the same or may be different.

This first example of conventional construction of a tandem angular ball bearing 1 differs from a conical roller bearing in that there is no sliding contact during operation, so it is possible to keep the dynamic torque low and reduce the resistance of the differential gear. In addition, the radial load and thrust load that occur in the engagement section between the pinion gear 4 and the ring gear is supported by the balls 7 arranged in a plurality of rows, so it is possible to maintain sufficient load capacity for the load in both of these directions. However, in this ball bearing 1, from the aspect of maintaining sufficient reliability of durability in tandem angular construction, the following improvements are considered necessary.

The outer ring 5 of the ball bearing 1 must fit by an interference fit inside the support hole 22 of the support unit 21 that is located on the inside of the differential casing, and similarly, the inner ring 6 must fit by an interference fit around the pinion shaft 3. The reason for this is to prevent creep from occurring in the sections where the outer ring 5 and inner ring 6 fit with other members during operation of the differential gear, and to prevent looseness from occurring in these fitting sections due to wear. However, when assembled so that the component members of the ball bearing 1 do not separate from each other, it is not possible to securely fit the outer ring 5 in the support hole 22, and similarly it is not possible to securely fit the inner ring 6 around the pinion shaft 3 with an interference fit. The reason for this is that when performing the work for securely fitting the members, Brinell impressions are formed in the parts of the outer ring raceways 10, 11 and the inner ring raceways 12, 13 where the rolling surfaces of the balls 7 come in contact, and not only do these impressions cause excessive vibration and noise to occur during operation of the ball bearing 1, durability is greatly compromised.

Therefore, when the ball bearing 1 is assembled between the inner peripheral surface of the supporting hole 22 and outer peripheral surface of the pinion shaft 3, as disclosed in Patent Document 3, the outer ring 5 is fitted inside the support hole 22 by an interference fit, and the inner ring 6 is fitted around the pinion shaft 3 by an interference fit, beforehand, or in other words, before completing assembly of the component members of the ball bearing 1, after which the outer ring 5 and the inner ring 6 are put together by way of the balls 7. When doing this, before putting the outer ring 5 and the inner ring 6 together, the balls 7 are placed on a peripheral surface of one of the bearing rings (inner-diameter side sections of the outer ring raceways 10, 11, or outer-diameter sections of the inner ring raceways 12, 13) and held by the cages 8, 9. The other bearing ring, together with the member with which the other bearing ring is fitted, is inserted in the inner-diameter side section or outer-diameter side section of the balls 7. The rolling surface of the balls 7 are then brought into contact with both the outer ring raceways and inner ring raceways.

When performing the assembly work of this kind of ball bearing 1, positioning of the differential casing in which the outer ring 5 is securely fitted, and the pinion shaft 3 around which the inner ring 6 is securely fitted is performed with sufficiently good precision, and with the center axis of the inner ring 6 exactly coinciding with the center axis of the outer ring 5, the inner ring 6 and outer ring 5 are brought close together in the axial direction, and by placing the inner ring 6 inside the inner diameter side of the outer ring 5, there is no particular problem with the durability of the ball bearing 1 after assembly. However, due to variation in the precision or improper adjustment of the assembly apparatus, the center axis or the inner ring 6 and the center axis of the outer ring 5 may not coincide, for example there may be tilting or eccentricity between them, or there maybe shifting between the placement state of the balls 7 such as tilting between the balls 7 in both rows, and when the inner ring 6 and outer ring 5 are put together in such a state, there is a possibility that the rolling surfaces of the balls 7 that are held in one of the bearing rings will forcibly strike against or strongly rub against the surface around the other bearing ring. Such a possibility also occurs when the balls 7 that are held by the cages 8,9 are placed into the sections around the other bearing ring.

On the other hand, of the inner peripheral surface of the outer ring 5 and the outer peripheral surface of the inner ring 6, both outer ring raceways 10, 11 and both inner ring raceways 12, 13 are smooth polished surfaces, however, the portions separated from these raceways are rough, and have sharp corners. When putting the outer ring 5 and inner ring 6 together, these rough surface or corner sections powerfully strike against or strongly rub against part of the rolling surfaces of the balls 7, so there is a possibility that damage such as scratches will occur to the rolling surfaces. The occurrence of this kind of damage makes it easy for large vibration or noise to occur during operation of the differential gear, and become a cause of an excessive decrease in the life of the balls, and thus there is a possibility that the durability of the tandem angular ball bearing will be adversely affected.

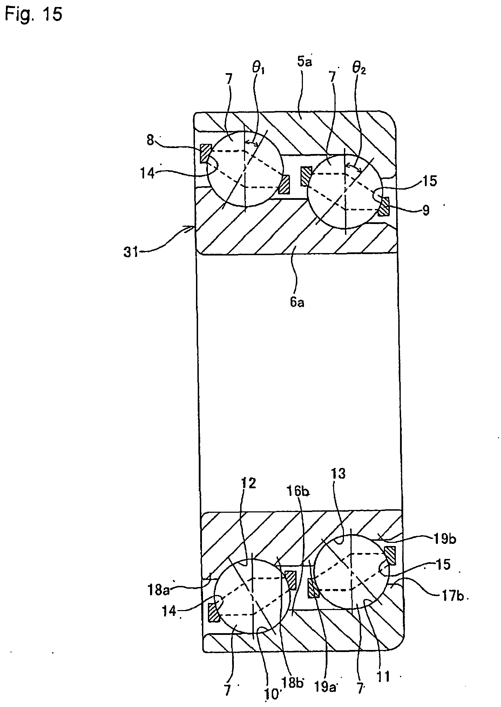

Moreover, FIG. 15 to FIG. 17 illustrate another example of conventional construction of a tandem angular ball bearing as disclosed in Patent Document 6. In this second example of conventional construction of a tandem angular ball bearing, the basic construction is the same as that of the conventional construction of the first example. As in the first example, contact angles having the same direction (in a tandem arrangement) are applied to the balls 7 of the ball row on the large-diameter side and the balls 7 of the ball row on the small-diameter side. The size of the contact angles θ₁, θ₂ of both these rows can be the same (θ₁ = θ₂), or can be different (θ₁ ≠ θ₂).

In this second example of conventional construction, the outer ring 5a does not have groove shoulder sections on one side in the axial direction of both outer ring raceways on the large-diameter side and small-diameter side (the "one side" in the axial direction is the left side in FIGS. 15 to 17; on the other hand the right side in FIGS. 15 to 17 is called the "other side" in the axial direction), but has groove shoulder sections 16b, 17b on only the other side in the axial direction. On the other hand, the inner ring 6a has groove shoulder sections 18a, 18b, 19a, 19b on both sides in the axial direction of the inner ring raceways 12, 13 on the large-diameter side and small-diameter side. The cages 8, 9 on the large-diameter side and small-diameter side are constructed such that they hold the balls 7 in pockets 14, 15 so that the balls 7 do not come out of the pockets 14, 15 in the radial direction.

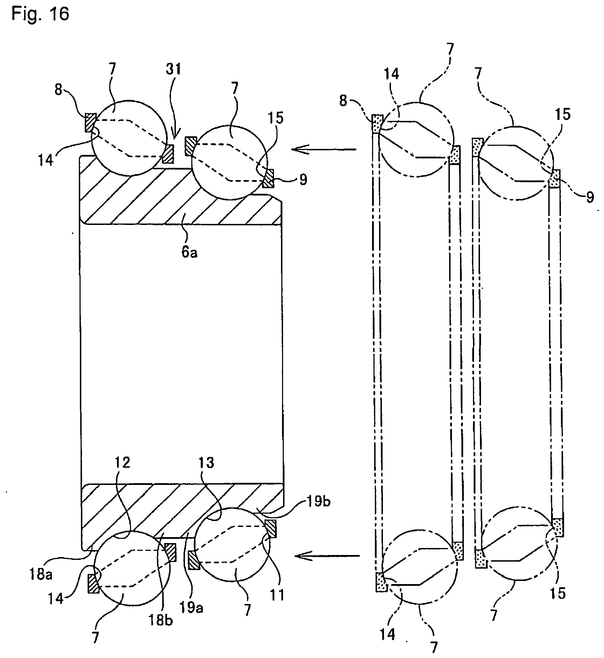

When assembling this second example of construction of a tandem angular ball bearing, first, an inner ring side assembly 31 is assembled as illustrated by the solid lines in FIG. 16. In order for this, as illustrated by the dashed lines in the same figure, the balls 7 are held inside the pockets 14, 15 of the cages 8, 9 on the large-diameter side and small-diameter side. The diameter of the inscribed circle of these balls 7 that are held in the pockets 14 of the cage 8 on the large-diameter side when located nearest to the outer-diameter side of the cage 8 without causing the cage 8 to elastically deform, is less than at least the outer diameter of the groove shoulder sections 18a, 18b located on both sides in the axial direction of the inner ring raceway 12 on the large-diameter side. Moreover, the diameter of the inscribed circle of these balls 7 that are held in the pockets 15 of the cage 9 on the small-diameter side when located nearest to the outer-diameter side of the cage 9 without causing the cage 9 to elastically deform, is less than at least the diameter of the groove shoulder sections 19a, 19b located on both sides in the axial direction of the inner ring raceway 13 on the small-diameter side. After the balls 7 are held inside the pockets 14, 15 of the cages 8, 9 on the large-diameter side and small-diameter side as described above, next, as illustrated by the arrows in FIG. 16, the balls that are held by the cages 8, 9 on the large-diameter side and small-diameter side are put into place around the outer-diameter side of the inner ring 6a from the other side in the axial direction of the inner ring 6a. By doing so, as illustrated by the solid lines in FIG. 16, the balls 7 that are held by the cages 8, 9 on the large-diameter side and small-diameter side are assembled around the outer-diameter side of the inner ring raceways 12, 13 on the large-diameter side and small-diameter side. When doing this, the balls 7 that are held by the cages 8,9 on the large-diameter side and small-diameter side cause the cages 8, 9 on the large-diameter side and small-diameter side to elastically deform, and as the diameter of the inscribed circle of these balls 7 increases, they pass over the groove shoulder sections 18b, 19a, 19b. After passing over these shoulder sections 18b, 19a, 19b, the cages 8, 9 on the large-diameter side and small diameter side are elastically restored and the diameter of the inscribed circles of the balls decreases, with the balls 7 now being in the assembled state around the outer-diameter side of the inner ring raceways 12, 13 on the large-diameter side and small-diameter side.

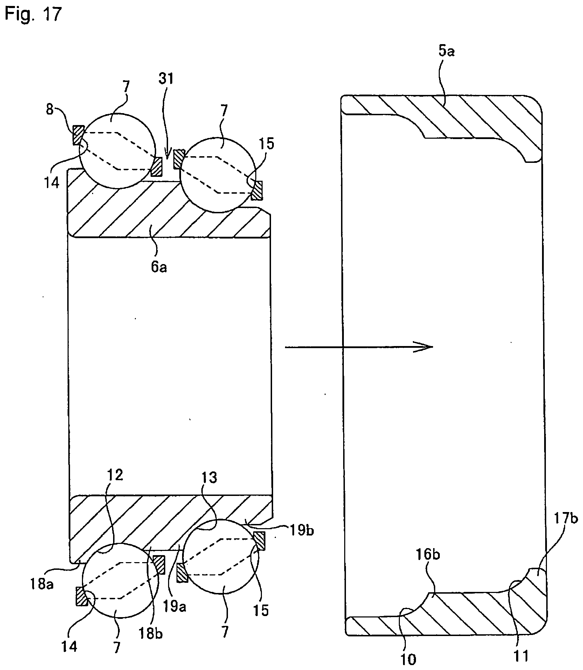

In this way, with the inner ring side assembly 31 completed, the balls 7 that are held by the cages 8, 9 on the large-diameter side and small-diameter side are prevented from dropping out of the pockets 14, 15 of the cages 8, 9 on the large-diameter side and small-diameter side toward the outer-diameter side, and are prevented by the groove shoulder sections 18a, 18b, 19a, 19b from dropping out of the inner ring raceways 12, 13 on the large-diameter side and small diameter side in the axial direction. Therefore, the inner ring 6a, the cages 8, 9 on the large-diameter side and small-diameter side and the balls 7 can be handled together as one inner ring side assembly 31. After the inner ring side assembly 31 has been assembled, then, as illustrated in FIG. 17, the inner ring side assembly 31 is placed in the inner-diameter side of the outer ring 5a from the one side in the axial direction of the outer ring 5a. As illustrated in FIG. 15, by assembling the balls 7 that are held by the cages 8, 9 on the large-diameter side and small-diameter side in the inner-diameter side of the outer ring raceways 10, 11 on the large-diameter side and small-diameter side, assembly of the tandem angular ball bearing is complete. In the case of this second example of conventional construction, there are no groove shoulder sections in the portions on the one side in the axial direction of the outer ring raceways 10, 11 on the large-diameter side and small-diameter side, so the work of putting the inner ring side assembly 31 in place as described above can be performed smoothly.

In the second example of conventional construction, the tandem angular ball bearing is divided and handled as two elements; the outer ring 5a and the inner ring side assembly 31. Therefore, by having the bearing manufacturer assemble this inner ring assembly 31 before shipping, at the assembly site of various rotational mechanical equipment such as a differential apparatus, the work of assembling this tandem angular ball bearing in the location where it will be used can be performed easily.

In this second example of conventional construction, as in the first example of conventional construction, when this tandem angular ball bearing is assembled between the inner peripheral surface of the support hole 22 of the support member 21 that is located inside the differential casing and the outer peripheral surface of the pinion shaft 3, the outer ring 5a is fitted inside the support hole 22 with an interference fit, and the inner ring 6a is fitted around the section near the tip end of the pinion shaft 3 with an interference fit, after which the outer ring 5a and inner ring 6a are put together by way of the balls 7.

When using the tandem angular ball bearing of this second example of conventional construction, the inner ring 6a, together with the cages 8, 9 on the large-diameter side and small-diameter side and the balls 7 are handled together as one inner ring side assembly 31 before the inner ring 6a is fitted around the tip end section of the pinion shaft 3 with an interference fit. In other words, even with the inner ring side assembly 31 in the assembled state, by performing the work of fitting the inner ring 6a around the pinion shaft 3 with an interference fit by pressing the end surface in the axial direction of the inner ring 6a, indentations are not formed in the section where the rolling surfaces of the balls 7 come in contact with the inner ring raceways 12, 13 on the large-diameter side and small-diameter side when performing this work of fitting the inner ring 6a. Therefore, the work of assembling the tandem angular ball bearing between the inner peripheral surface of the support hole 22 and the outer peripheral surface of the pinion shaft 3 can be performed easily without damaging the component members.

Incidentally, even in the tandem angular ball bearing of this second example of conventional construction, there are the following problems to be solved.

The first problem is caused by there not being groove shoulder sections in the portions on the one side in the axial direction of the outer ring raceways 10, 11 on the large-diameter side and small-diameter side. For example, when this type of tandem angular ball bearing is assembled and used in an apparatus in which lubrication oil is supplied to the bearing only during operation, such as in some differential gears, lubrication oil is not collected in the bottom end sections of the outer ring raceways 10, 11 when operation stops, so the lubrication oil leaks out through the portions on the one side in the axial direction of these bottom end sections of the outer ring raceways 10, 11 on the large-diameter side and small-diameter side. Therefore, when operation is restarted, there is a problem in providing good initial lubrication.

The second problem is a problem caused when the inner ring side assembly 31 is in the assembled state, and a plurality of balls 7 in the outer most section in the radial direction of this inner ring side assembly 31 are exposed. In other words, there is a problem that before assembling the tandem angular ball bearing, it is easy for the balls 7 of the inner ring side assembly 31 to bump against other parts while being transported, making it easy for damage such as scratches and the like to occur on the rolling surfaces of the balls 7.

These problems are also problems linked to a decrease in durability of the tandem angular ball bearing, so there is a large need for these problems to be solved.

Up until now much trying or testing has been performed in an attempt to improve the characteristics of tandem angular ball bearings, such as reducing the dynamic torque. However, in known literature, including Patent Documents 1 to 6, nothing is disclosed about technology for preventing damage to the rolling surfaces of the balls during assembly of a tandem angular ball bearing, and currently problems such as described above have not been sufficiently solved.

WO 85/03749 A1 discloses a double row angular contact ball bearing according to the preamble of claim 1 with unilateral loading capacity, in which the balls of a tandem angular ball bearing are held in a cage, and in which the diameters of the ball bearing paths or of the balls may be different such that the more compact construction of this tandem ball bearing can be achieved.

### [Related Art Documents]

### [Patent Documents]

[Patent Document 1] Japanese Patent Application Publication No. H11-48805
[Patent Document 2] Japanese Patent Application Publication No. 2004-169890
[Patent Document 3] Japanese Patent Application Publication No. 2004-183745
[Patent Document 4] Japanese Patent Application Publication No. 2009-138795
[Patent Document 5] Japanese Patent Application Publication No. 2002-523710
[Patent Document 6] Japanese Patent Application Publication No. 2004-124996

### SUMMARY OF THE INVENTION

### [Problems to be Solved by the Invention]

Taking the above situation into consideration, the object of the present invention is to provide a tandem angular ball bearing that, when assembled between the inner peripheral surface of a stationary section, such as a support section that is located inside a housing such as a differential casing, and the outer peripheral surface of a rotating shaft, is capable of preventing the occurrence of damage to the rolling surfaces of the balls such as scratches that are of such an extent that will cause an excessive decrease in the life of the bearing, as well as maintaining excellent durability of the tandem angular ball bearing without the occurrence of excessive vibration and noise during operation.

Moreover, another object of the present invention is construction of a tandem angular ball bearing in which the bearing is divided into and handled as two elements, and in which it is difficult for the plurality of balls to hit against other parts while transporting the elements

These objects are achieved by the features in claim 1..

A first embodiment of the tandem angular ball beating, as in a conventional tandem angular ball bearing, comprises an outer ring, inner ring and a plurality of balls. The outer ring has two rows of outer ring raceways, each having a different inner diameter, formed around an inner peripheral surface thereof. The inner ring is concentrically located on the inner-diameter side of the outer ring and has two rows of inner ring raceways, each having a different outer diameter, formed around an outer peripheral surface thereof. Furthermore, a plurality of balls are located in each row between both the inner ring raceways and both the outer ring raceways, such that the balls roll freely with a contact angle being applied in the same direction between each row

Particularly, in this first embodiment of the tandem angular ball bearing, the entire portion of the inner peripheral surface of the outer ring from the outer ring raceway having the small inner diameter to a continuous section that is continuous with one end surface of both end surfaces in the axial direction of the outer ring on the side having the large inner diameter, and the entire portion of the outer peripheral surface of the inner ring from the inner ring raceway having the large outer diameter to a continuous section that is continuous with one end surface of both end surfaces in the axial direction of the inner ring on the side having the small outer diameter are polished smooth surfaces having no indifferentiable corner sections, or in other words, no sharp corner sections in the cross-section shape

The inner peripheral surface of the outer ring is defined as the entire surface of the surface of the outer ring when seen from the inside in the radial direction Therefore, more accurately, not only the portion of the inner peripheral surface that faces inward in the radial direction, but also the continuous section having an arc shaped cross section that is located between this inner peripheral surface portion and the end surfaces in the axial direction is included in the inner peripheral surface of the outer ring This continuous section is the section from the border that is continuous with the inner peripheral surface section up to the outer perimeter edge section. Similarly, the outer peripheral surface of the inner ring is defined as the entire surface of the inner ring as seen from the outside in the radial direction, and more specifically, is not only just the portion of the outer peripheral surface that faces outward in the radial direction, by also the continuous section having an arc shaped cross section and that is located between this outer peripheral surface portion and the end surfaces in the axial direction, which is the from the border between this continuous section and the outer peripheral surface portion to the inner perimeter edge section, is included in the outer peripheral surface of the inner ring

A second embodiment of a tandem angular ball bearing also, as in a conventionally known tandem angular ball bearing, comprises: an outer ring having a large-diameter side outer ring raceway having a relatively large diameter on one side in the axial direction of the inner peripheral surface thereof, and similarly a small-diameter side outer ring raceway having a relatively small diameter on the other side in the axial direction; an inner ring having a large-diameter side inner ring raceway having a relatively large diameter on one side in the axial direction of the outer peripheral surface thereof, and similarly a small-diameter side inner ring raceway having a relatively small diameter on the other side in the axial direction; a large-diameter side cage having a relatively large diameter and having pockets in a plurality of locations in the circumferential direction thereof; a small-diameter side cage having a relatively small diameter and having pockets in a plurality of locations in the circumferential direction thereof; a plurality of balls that form a large-diameter side ball row and that are held in the pockets of the large-diameter side cage so that they freely roll between the large-diameter side outer ring raceway and large-diameter side inner ring raceway; and a plurality of balls that form a small-diameter side ball row and that are held in the pockets of the small-diameter side cage so that they freely roll between the small-diameter side outer ring raceway and small-diameter side inner ring raceway Moreover, contact angles are applied in the same direction to the balls that form the large-diameter side ball row, and to the balls that form the small-diameter side ball row

Particularly, in this second embodiment of the tandem angular ball bearing, the outer ring comprises groove shoulder sections in at least one of the portion on the one side in the axial direction of the large-diameter side outer ring raceway and the portion on the one side in the axial direction of the small-diameter side outer ring raceway, in the portion on the other side in the axial direction of the large-diameter side outer ring raceway, and in the portion on the other side in the axial
direction of the small-diameter side outer ring raceway.

In this second embodiment of the invention, the outer ring comprises groove shoulder sections in the portions on both sides in the axial direction of the large-diameter side outer ring raceway, and in the portions on both sides in the axial direction of the small-diameter side outer ring raceway At the same time, the inner ring comprises groove shoulder sections in the portion on the one side in the axial direction of the large-diameter side inner ring raceway, and in the portion on the one side in the axial direction of the small-diameter side inner ring raceway, and does not comprise groove shoulder sections in the portion on the other side in the axial direction of the large-diameter side inner ring raceway, and in the portion on the other side in the axial direction of the small-diameter side inner ring raceway Furthermore, the large-diameter side cage and small-diameter-side cage have a shape such that, with the balls held in the pockets, the cages can prevent the balls from dropping out of or escaping from the pockets into the inner-diameter side,

Alternatively, the outer ring comprises groove shoulder sections in the portion on both sides in the axial direction of the large-diameter side outer ring raceway, and in the portion on the other side in the axial direction of the small-diameter side outer ring, and does not comprise a groove shoulder section in the portion on the one side in the axial direction of the small-diameter side outer ring raceway At the same time, the inner ring comprises groove shoulder sections in the portion on the one side in the axial direction of the large-diameter side inner ring raceway, and in the portion on the one side in the axial direction of the small-diameter side inner ring raceway, and does not comprise groove shoulder sections in the portion on the other side in the axial direction of the large-diameter side inner ring raceway, and in the portion on the other side in the axial direction of the small-diameter side inner ring raceway Furthermore, the large-diameter side cage and the small-diameter side cage have a shape such that, with the balls held in the pockets, the cages can prevent the balls from dropping out of the pockets into the inner-diameter side, and when an outer ring side assembly is made by combining the outer ring, large-diameter side cage, small-diameter-side cage and the balls with the same positional relationship as the completed state as a ball bearing, the end sections of the large-diameter side cage and the small-diameter side cage that are close to each other face each other in the axial direction,

Moreover, alternatively, the outer ring comprises groove shoulder sections in the portion on the other side in the axial direction of the large-diameter side outer ring raceway, and in the portions on both side in the axial direction of the small-diameter side outer ring raceway, and does not comprise a groove shoulder section in the portion on the one side in the axial direction of the large-diameter side outer ring raceway. At the same time, the inner ring comprises a groove shoulder section in the portion on the one side in the axial direction of the large-diameter side inner ring raceway, and in the portion on the one side in the axial direction of the small-diameter side inner ring raceway, and does not comprise groove shoulder sections in the portion on the other side in the axial direction of the large-diameter side inner ring raceway, and in the portion on the other side in the axial direction of the small-diameter side inner ring raceway Furthermore, the large-diameter side cage and small-diameter side cage have a shape such that, with the balls held in the pockets, the cages can prevent the balls from dropping out of the pockets into the inner-diameter side, and when an outer ring side assembly is made by combining the outer ring, large-diameter side cage, small-diameter-side cage and the balls with the same positional relationship as the completed state as a ball bearing, part of the cages engage with each other and prevent the cages from displacement in a direction in the axial direction separating from each other,

The tandem angular ball bearing according to any one of the embodiments described above, that together with supporting a rotating shaft of a mechanical apparatus that is assembled in the power transmission system of an automobile such that the rotating shaft rotates freely, is used for supporting loads in both the radial and axial directions that act on the rotating shaft

With one embodiment of the tandem angular ball bearing, when assembled between the inner peripheral surface of a fixed portion such as a support section formed inside a housing such as a differential casing, and the outer peripheral surface of a rotating shaft, it is possible to prevent damage such as scratching from occurring to the rolling surfaces of the balls to an extent that would excessively decrease the life of the balls In other words, in the tandem angular ball bearing, when combining the outer ring that is securely fitted on the inside of the stationary portion and the inner ring that is securely fitted around
the rotating shaft, the entire portions of the inner peripheral surface of the outer ring and the outer peripheral surface of the inner ring that the rolling surfaces of the balls can come in contact with are smooth surfaces with no sharp corners. Therefore, when performing the assembly work, damage to the rolling surfaces of the balls such as scratching does not occur even when a rolling surface of a ball forcibly hits against or strongly rubs against any portion of the inner peripheral surface of the outer ring or outer peripheral surface of the inner ring. Consequently, during operation of the tandem angular ball bearing, it is possible to prevent excessive vibration or noise due to damage to the rolling surfaces of the balls, and thus it is possible to sufficiently maintain the durability of the tandem angular ball bearing.

In the case of another embodiment of the tandem angular ball bearing of the present invention, groove shoulder sections are provided on both sides in the axial direction of at least one of the outer ring raceways of both outer ring raceway on the large-diameter side or small-diameter side. Therefore, for example, by using the tandem angular ball bearing of the present invention in an apparatus to which lubrication oil is supplied only during operation, such as in some differential gears, lubrication oil is collected in the bottom end sections of the outer ring raceway(s), from among both outer ring raceways, having groove shoulder sections on both sides in the axial direction. This enables good initial lubrication in both rows when restarting operation. In other words, when there are groove shoulder sections on both sides in the axial direction of both outer ring raceways, lubrication oil is collected in the bottom end sections of both outer ring raceways on the large-diameter side and small-diameter side. Therefore, when operation is restarted, there is good initial lubrication due to the lubrication oil that is collected in both of these bottom end sections. Moreover, when there is a groove shoulder section on both sides in the axial direction of only one of the outer ring raceways from among both outer ring raceways on the large-diameter side and small-diameter side, when operation is stopped, lubrication oil is collected in the bottom end section of only one outer ring raceway. However, as operation is restarted, some of the lubrication oil that is collected in the bottom end section of that one outer ring raceway is pushed to the outside by the balls rolling in that outer ring raceway, and enters into the other outer ring raceway, so it is possible to have good initial lubrication in not only the row that includes the one outer ring raceway, but also in the row that includes the other outer ring raceway.

Furthermore, by combining the outer ring, both cages on the large-diameter side and small-diameter side, and the balls that form both ball rows on the large-diameter side and small-diameter side into a state that is the same as the completely assembled tandem angular ball bearing, these parts can be treated as a single outer ring side assembly

In this case, the tandem angular ball bearing is divided into and treated as two elements; an outer ring side assembly and an inner ring Therefore, by shipping this outer ring side assembly after being assembled by the bearing manufacturer, at the assembly site of various kinds of rotating mechanical equipment such as a differential apparatus, the work of assembling the tandem angular ball bearing of the present invention in the location where the bearing will be used can be performed easily

Particularly, in the case of the present invention, with the outer ring side assembly assembled, the plurality of balls is placed on the inner-diameter side of the outer ring. Therefore, it is possible to avoid the problem of the balls being damaged by hitting against other parts while being transported before assembling the tandem angular ball bearing

### BRIEF DESCRIPTION OF THE DRAWINGS

FIG. 1 is a half cross-sectional diagram illustrating a tandem angular ball bearing of a first example important for understanding the present invention.
FIG. 2 is a half cross-sectional diagram for illustrating the portion of the inner peripheral surface of the outer ring and outer peripheral surface of the inner ring of which the radius of curvature of the cross-sectional shape should be maintained in the first example
FIG. 3 is a half cross-sectional diagram for illustrating the portions of the inner peripheral surface of the outer ring and the outer peripheral surface of the inner ring whose surfaces in the portions that are separated from the outer ring raceways and inner ring raceways are to be smooth in the first example,
FIG. 4 is a half cross-sectional diagram illustrating the state of assembling the balls in the inner-diameter side of the outer ring before the outer ring is fitted inside the support section in the first example,
FIG. 5 is a half cross-sectional diagram illustrating the state in which after the outer ring in which the plurality of balls have been assembled on the inner-diameter side has been fitted inside the support section, the inner ring that has been fitted around the pinion shaft beforehand is assembled on the inner-diameter side of these balls in the first example.
FIG. 6 is a cross-sectional diagram of a tandem angular ball bearing of a second example important for understanding the present invention.
FIG. 7 is a cross-sectional diagram of part of a cage that holds balls in the second example.
FIG. 8 is a cross-sectional diagram illustrating the assembled state of an outer ring side assembly in the second example.
FIG. 9 is a cross-sectional diagram illustrating the state of combining the outer ring side assembly and inner ring to complete the tandem angular ball bearing in the second example.
FIG. 10 is a cross-sectional diagram illustrating a tandem angular ball bearing of an example of realization of the present invention.
FIG. 11 is a cross-sectional diagram illustrating the state of assembling the outer ring side assembly in the example of realization of the present invention.
FIG. 12 is a cross-sectional diagram illustrating a tandem angular ball bearing of a third example important for understanding the present invention.
FIG. 13 is a cross-sectional diagram illustrating the state of assembling the outer ring side assembly in the third example.
FIG. 14 is a half cross-sectional diagram illustrating an example of the rotation support section of the pinion shaft of a differential gear in which a tandem angular ball bearing having conventional construction is assembled.
FIG. 15 is a cross-sectional diagram illustrating another example of a tandem angular ball bearing having conventional construction.
FIG. 16 is a cross-sectional diagram illustrating the state of assembling the inner ring side assembly in the example of FIG. 15.
FIG. 17 is a cross-sectional diagram illustrating the state of combining the outer ring and inner ring side assembly and completing the tandem angular ball bearing in the example of FIG. 15.

### [Example 1]

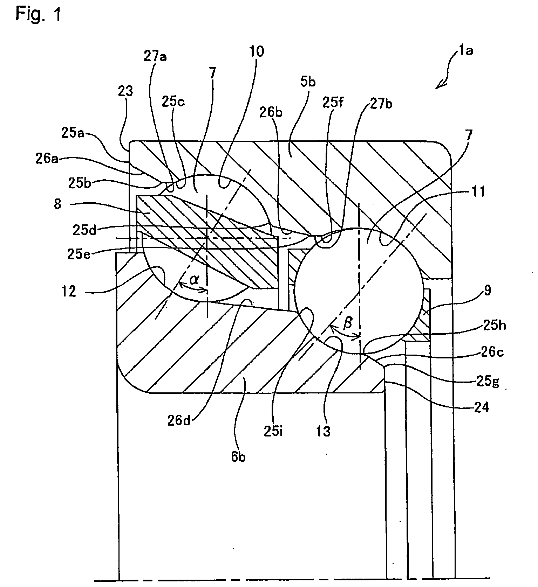

FIGS. 1 to 5 illustrate a first example important for understanding the present invention. The ball bearing 1a of this example of a tandem angular ball bearing comprises an outer ring 5b, and inner ring 6b, a plurality of balls 7 and a pair of cages 8,9 The outer ring 5b has two rows of angular type outer ring raceways 10,11 having different inner diameters formed around the inner peripheral surface thereof The inner ting 6b is located on the inner diameter side of the outer ring 5b such that it is concentric with the outer ring 5b, and has two rows of angular type inner ring raceways 12, 13 having different outer diameters formed around the outer peripheral surface thereof in the portion that faces the outer ring raceways 10,11 During operation, a thrust load is applied between the outer ring 5b and inner ring 6b such that it presses the outer ring 5b toward the left in FIG. 1, and similarly presses the inner ring 6b toward the right When assembled in a differential gear, the large-diameter side of the outer peripheral surface of the inner ting 6b is the input side, and the thrust load is applied to the inner ring 6b in the right direction in FIGS. 1 to 3 and 5. On the other hand, the small-diameter side of the inner peripheral surface of the outer ring 5b is the output side of this thrust load, and a force in the left direction of FIGS. 1 to 5 is applied to the outer ring 5b as a reaction force to this thrust load

The inner diameters of the outer ring raceways 10, 11 are such that the inner diameter of the outer ring raceway 10 on the front side in the direction that the reaction force acts on the outer ring 5b (left side in FIG. 1) is large, and similarly the inner diameter of the outer ring raceway 11 on the rear side (right side in FIG. 1) is small. Moreover, the outer diameters of the inner ring raceways 12, 13 are such that the outer diameter of the inner ring raceway 12 on the rear side in the direction that the thrust load acts on the inner ring 6b (left side in FIG. 1) is large, and similarly the outer diameter of the inner ring raceway 13 on the front side (right side in FIG. 1) is small Furthermore, the balls 7 are located between both outer ring raceways 10, 11 and both inner ring raceways 12,13, with a plurality of balls 7 being located in each row, and with the contact angles α, β being applied in the same direction between pairs of rows, such that the balls roll freely In other words, the ball bearing 1a has a tandem arrangement The contact angles α, β can be the same or can be different from each other. The cages 8,9 have different diameters and hold the balls 7 in both rows so that they roll freely The basic construction of this ball bearing 1a is the same as the conventional tandem angular ball bearing 1 illustrated in FIG. 14

Particularly, in the case of the ball bearing 1a of this example, of the inner peripheral surface of the outer ring 5b, the entire section from the outer ring raceway 11 having a small inner diameter to the continuous section with the end surface 23 in the axial direction of the outer ring 5b on the side having the large inner diameter has no indifferentiable corner sections in the cross-sectional shape, in other words, there are no sharp coiner sections, such that the section is smooth and continuous, and is a smooth polished surface Moreover, of the outer peripheral surface of the inner ring 6b, the entire section from the inner ring raceway 12 having a large outer diameter to the continuous section with the end surface 24 in the axial direction of the inner ring 6b on the side having a small outer diameter has no indifferentiable corner sections in the cross-sectional shape, in other words, there are no sharp corner sections, such that the section is smooth and continuous, and is a smooth polished surface Both of the end sections 23, 24 themselves do not necessarily need to be smooth surfaces, and making them smooth surfaces is optional However, the corner sections 25a, 25g are continuous sections with both end surfaces 23, 24, and the inner peripheral surface of the outer ring 5b or outer peripheral surface of the inner ring 6b, and both are smooth surfaces"

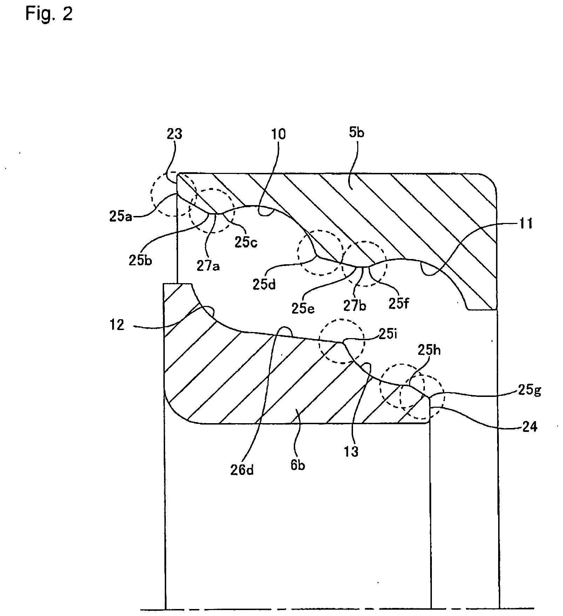

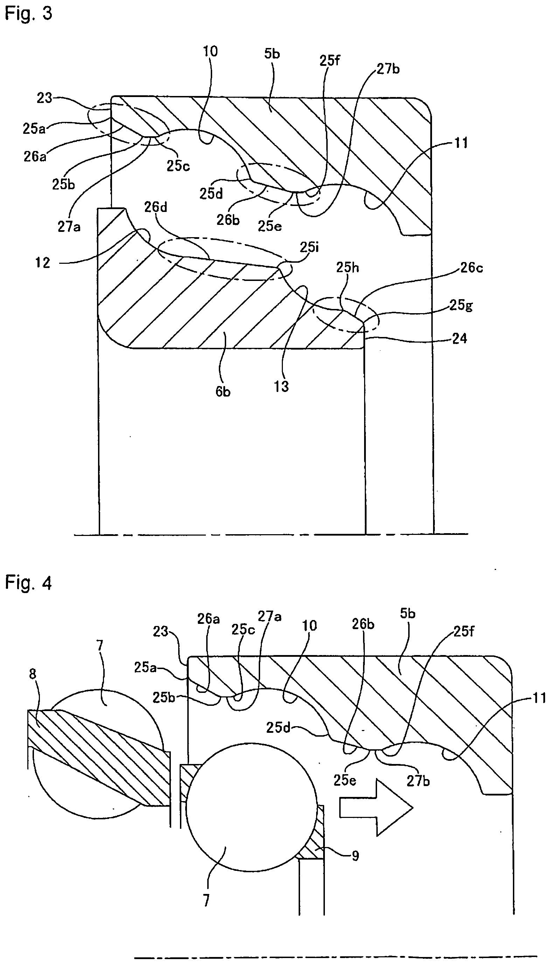

The point described above will be explained in further detail with reference to FIGS. 2 and 3 Both outer ring raceways 10, 11 of the inner peripheral surface of the outer ring 5b, and both inner ring raceways 12, 13 of the outer peripheral surface of the inner ring 6b undergo polishing using a conventional grindstone to become polished surfaces Not only this section, but also the sections in the conventional construction other than the raceways 10 to 13 of both the inner and outer peripheral surfaces, where the rough surfaces and sharp corners were left without performing any special processing such as polishing, also undergo polishing to become smooth surfaces

For example, as illustrated by the dashed circles in FIG 2, of the corners sections 25a to 25i positioned at six locations on the inner peripheral surface of the outer ring 5b, and three locations on the outer peripheral surface of the inner ring 6b, for a total of nine locations, the corner sections 25, 25d, 25f, 25h and 25i that are located in the edge sections on the sides of the raceways 10, 11 and 13 are left as they are having edge shapes (cross-sectional shape having indifferentiable sharp ends) that were formed during polishing of the tracks 10, 11 and 13, unless special processing is performed In
addition, the remaining corner sections 25a, 25b, 25e and 25g are also left as they are having edge shapes that were formed during cutting of adjacent surfaces. In short, unless special processing is performed, all of the corner sections 25a to 25i have indifferentiable shapes, or in other words, sharp shapes to which a single tangent line cannot be set at a certain point, and that have a radius of curvature in the cross-sectional shape of nearly 0, are left as they are.

Moreover, as illustrated by the dot-dashed ellipses in FIG. 3, the inclined surface sections 26a to 26d positioned at two locations on each of the inner peripheral surface of the outer ring 5b and outer peripheral surface of the inner ring 6b, for a total of four locations, and the cylindrical surface sections 27a and 27b at two locations continuous from the large-diameter side of both outer ring raceways 10, 11 are left as they are as cut surfaces or heat treated surfaces, unless special processing is performed. These kinds of rough surfaces easily become the cause of damage to the rolling surface of the balls during assembly of the ball bearing 1.

In the case of this example, polishing is performed on the inner peripheral surface of the outer ring 5b and the outer peripheral surface of the inner ring 6b up to portions other than both outer ring raceways 10, 11 and both inner ring raceways 12, 13, and each of the inclined surface sections 26a to 26d and the cylindrical surface sections 27a, 27b are smooth surfaces. In other words, the inclined surface sections 26a to 26d and the cylindrical surface sections 27a, 27b are smooth surfaces having an arithmetic mean deviation of the profile (Ra) of approximately 0.4 µm. As will be described later, in regards to the surface roughness of the inclined surface sections 26a to 26d and both cylindrical surface sections 27a, 27b, polishing at the same time as the raceways 10 to 13 is considered, and as described above, Ra is about 0.4 µm. However, from the aspect of preventing damage to the rolling surfaces of the balls 7, there is no problem even when Ra is about 0.6 µm, or even about 0.8 µm. From the aspect of preventing damage to the rolling surfaces of the balls 7 and obtaining good quality raceways 10 to 13, a smaller value of the surface roughness is preferred, however, when the surface roughness is excessively small, the processing cost becomes high. When taking into consideration the processing cost, a surface roughness Ra less than 0.2 µm is not practical.

By making each of the inclined surface sections 26a to 26d and both cylindrical surface sections 27a, 27b smooth surfaces as described above, damage to the extent that will cause an excessive decrease in the life of the balls 7 does not occur on the rolling surfaces of the balls 7 even when there is a small amount of strong rubbing between the surface sections 26a to 26d, 27a and 27b and the rolling surfaces of the balls 7. From the aspect of simplifying processing, it is preferred that the surface roughness of the surface sections 26a to 26d, 27a and 27b be made the same as the surface roughness of the raceways 10 to 13 before the super finishing process that will be described later. The reason for this will be described later.

Furthermore, of the corner sections 25a to 25f located in the portion of the inner peripheral surface of the outer ring 5b between the surfaces located from the end surface 23 to the outer ring raceway 11 on the small-diameter side, and the corner sections 25g to 25i located in the portion of the outer peripheral surface of the inner ring 6b between the end surface 24 to the inclined surface section 26d undergo polishing to become convex curved surfaces having a radius of curvature in the cross-sectional shape of 0.2 mm or greater, and are smooth surfaces that are as smooth as the surface sections 26a to 26d, 27a and 27b. The upper limit of the radius of curvature of the cross-sectional shape of the corner sections 25a to 25i is not particularly limited. The larger this radius of curvature is, is advantageous from the aspect of preventing damage to the rolling surfaces of the balls 7, however, even when made uselessly large, a greater effect of preventing damage cannot be anticipated, and in regards to the corner sections 25c, 25d, 25f, 25h and 25i adjacent to the raceway surfaces, has an adverse effect from the aspect of the function of holding the balls 7 and maintaining the width of the rolling surfaces of the balls 7. Therefore, taking these points into consideration, and in some cases, taking into consideration the shape and material of the cages, the maximum value of this radius of curvature is restricted by design considerations. In the case of a tandem angular ball bearing for supporting a pinion shaft of a differential gear or transfer apparatus, making the radius of curvature greater than 1 mm is not preferable. The cross-sectional shape of the corner sections 25a to 25i can be a single arc shape or can be a complex arc shape that is made continuously smooth by combining a plurality of arcs having different radii of curvature. In this case, the arc section having the smallest radius of curvature should have a radius of curvature of 0.2 mm or greater.

Together with increasing the radius of curvature of the cross-sectional shape of the corner sections 25a to 25i, it is preferred that the work of making shape and characteristic (surface toughness) of the inner peripheral surface of the outer ring 5b and the outer peripheral surface of the inner peripheral surface 6b as described above be performed by using a so-called form grindstone having a cross section profile that matches the cross section profile of the peripheral surfaces to be processed The reason for this is that, not only is it possible to perform processing of the shape and characteristic of the surfaces at the same time and with good processing efficiency, but also to eliminate the possibility of sharp uneven section occurring in divided sections such as in the case of dividing the surfaces in the width direction and performing processing using separate grindstones. For this reason, it is preferred that the finishing process of both peripheral surfaces be performed using a form grindstone, however, in the case of a form grindstone, making the characteristic the same over the entire with is realistic Because of such a reason, it is preferred that the surface roughness of each inclined surface 26a to 26d be the same as the roughness of the raceways 10 to 13 The cylindrical surface sections 27a and 27b that are located in the portion between the corner sections 25b and 25c, and in the portion between the corner sections 25e and 25f are also processed by a form grindstone to similarly become smooth surfaces The reason for doing this is because of rubbing between the cylindrical surface sections 27a and 27b and the rolling surfaces of the balls 7 during assembly of the ball bearing 1a.

Moreover, as described above, the portions of the raceways 10 to 12 are processed to smooth surfaces having a surface roughness Ra of about 04 µm, after which super finishing is performed Together with this super finishing process, extremely small bent sections in the cross-sectional shape are formed along the boundaries between the raceways 10 to 12 and the portions adjacent to the raceways 10 to 12; or in other words, there is a possibility that the cross section profile of the portions adjacent to the raceways 10 to 12 will completely not exist in the tangential direction with respect to the arc of the cross-section shape of the raceways 10 to 12 However, the bending angle of these bent sections, or in other words, the shift in direction of the cross section profile thereof with respect to the complete tangential direction is extremely small, so the bent sections do not damage or scratch the rolling surfaces of the balls 7 to an extent that would cause an excessive decrease in life of the balls 7 Therefore, the bent sections that occur due to this kind of super finishing are not treated as indifferentiable corner sections.

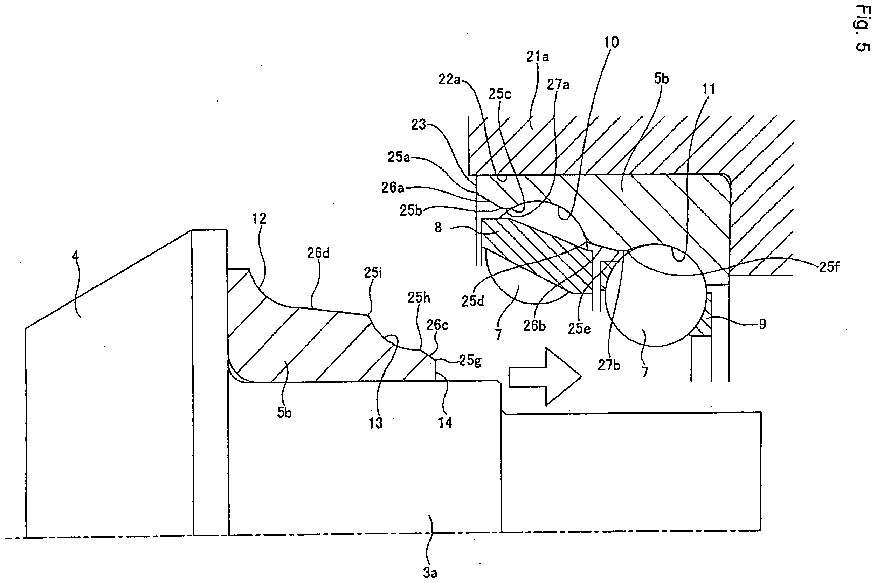

In order to assemble the tandem angular ball bearing 1a of this example above in between the inner peripheral surface of the support hole 22 in the support section 21a that is provided inside the differential casing and the outer peripheral surface of the pinion shaft 3a (see FIG. 5), first, as illustrated in FIG. 4, both rows of balls 7, being held in the respective cages 8, 9, are assembled in the inner-diameter side of the rows of outer ring raceways 10, 11 that are formed around the inner peripheral surface of the outer ring 5b. The inner diameters of the cylindrical surface sections 27a, 27b that are adjacent to both outer ring raceways 10, 11 are such that they are just a little less than the inner diameters of the bottom sections (portions where the inner diameter is the greatest) of the outer ring raceways 10, 11. Therefore, the balls 7 that are held by the cages 8, 9 cause the cages 8, 9 to elastically deformed, and with the diameter of the circumscribed circle of the balls being reduced, the balls 7 pass over the edge section of the end on the large-diameter side. After the balls 7 have passed over the edge section, the diameter of the circumscribed circle of the balls 7 is expanded by the cages 8, 9 being elastically restored, and part of the rolling surfaces of these balls 7 come in elastic contact with the outer ring raceways 10, 11. As a result, as illustrated in the upper right section of FIG. 5, the balls 7 are assembled on the inner-diameter side of the outer ring 5b by way of the cages 8, 9 so that they do not accidentally become separated. Therefore, the inner diameters of both cylindrical surface sections 27a, 27b are determined according to the material, thickness, shape and dimensions, and taking into consideration the amount of elastic deformation of the cages 8, 9, are set by design so that ease of assembly and no separation after assembly are achieved.

In any case, when performing the assembly work described above, there is a possibility that the balls 7 will hit against or rub against the corner sections 25a to 25f and the inclined sections 26a, 26b on the inner peripheral surface of the outer ring 5b. However, these corner sections 25a to 25f a convex curved surfaces having a radius of curvature of 0.2 mm or greater, and the inclined sections 26a, 26b and both cylindrical surface sections 27a, 27b are smooth surfaces, so the rolling surfaces of the balls 7 do not receive damage to an extent that would cause excessive decrease in the life of the balls 7. The work of assembling these balls 7 on the inner-diameter side of the outer ring 5b is performed in this way at the bearing manufacturing plant.

The outer ring 5b with the balls assembled in the inner-diameter side as described above is transported to the assembly plant of the differential gear, and as illustrated in the portion on the upper right section of FIG. 5, the outer ring 5b is securely fitted inside the support hole 22a with an interference fit. The fitting work is performed by pressing on the end surface 23 of the large-diameter side of the outer ring 5b, so the rolling surfaces of the balls 7 are not strongly pressed against the outer ring raceways 10, 11, and Brinell indentations are not formed in these outer ring raceways 10, 11.

After securely fitting the outer ring 5b in the inner-diameter side of the support hole 22a in this way, next, the inner ring 6b is inserted in the inner-diameter side of the balls 7 that are held in the inner-diameter side of this outer ring 5b. Before this insertion work, this inner ring 6b is securely fitted around the outside of the pinion shaft 3a by an interference fit as illustrated in the lower left of FIG. 5. When inserting the inner ring 6b on the inner-diameter side of the balls 7 in this ways as indicated by the bold arrow in FIG. 5, there is a possibility that the balls 7 will hit against or rub against the corner sections 25g to 25i and the inclined surface sections 26c, 26d located on the outer peripheral surface of this inner ring 6b. However, these corner sections 25g to 25i are convex curved surfaces having a radius of curvature of 0.2 mm or greater, and both inclined surface section 26c, 26d are smooth surfaces, so the rolling surfaces of the balls 7 do not receive damage to the extent that would cause an excessive decrease in the life of the balls 7.

From this, when assembling the ball bearing 1a of this example, which is a tandem angular ball bearing, between the support section 21a and the pinion shaft 3a, it is possible to prevent damage such as scratching from occurring to the rolling surfaces of the balls 7 to an extent that would cause an excessive decrease in life of the balls 7. Therefore, when operating a differential gear or the like in which the ball bearing 1a is assembled, excessive vibration or noise due to damage to the rolling surfaces of the balls 7 does not occur, and it is possible to sufficiently maintain durability of the ball bearing 1a and the differential gear or the like in which it is assembled.

### [Example 2]

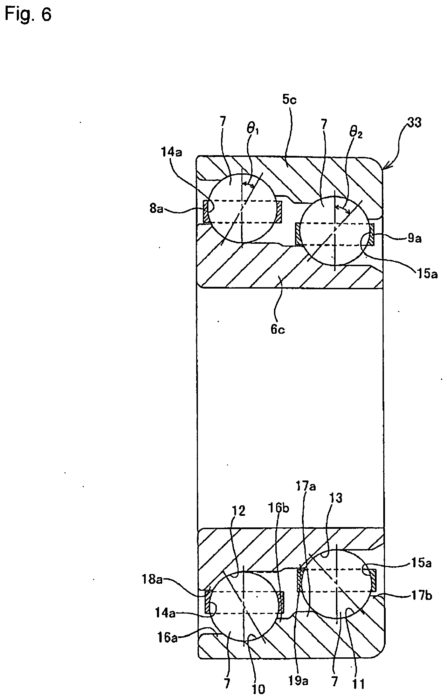

FIGS. 6 to 9 illustrate a second example important for understanding the present invention. The tandem angular ball bearing of this example comprises an outer ring 5c, an inner ring 6c, large-diameter side and small-diameter side cages 8a and 9a, and a plurality of balls 7 in a large-diameter side row and small-diameter side row. Double-row angular type large-diameter side and small-diameter side outer ring raceways 10, 11 having different inner diameters are formed around the inner peripheral surface of the outer ring 5c. Double-row angular type large-diameter side and small-diameter side inner ring raceways 12, 13 having different outer diameters are formed around the outer peripheral surface of the inner ring 6c. Cages 8a, 9b on the large-diameter side and small diameter side have a complete ring shape, and have pockets 14a, 15a at a plurality of locations uniformly spaced in the circumferential direction thereof. The balls 7 of the large-diameter side ball row are held inside the pockets 14a of the cage 8a on the large-diameter side such that they freely roll between the outer ring raceway 10 on the large-diameter side and the inner ring raceway 12 on the large-diameter side. Moreover, the balls 7 of the small-diameter side ball row are held inside the pockets 15a of the cage 9a on the small-diameter side such that they freely roll between outer ring raceway 11 on the small-diameter side and the inner ring raceway 13 on the small-diameter side. In this state, the balls 7 of the large-diameter side ball row and the balls 7 of the small-diameter ball row have contact angles in the same direction (in a tandem arrangement). The sizes of the contact angles θ₁, θ₂ of both of the rows can be the same (θ₁ = θ₂), or can be different (θ₁ ≠ θ₂). As described above, the basic construction of this tandem angular ball bearing is the same as the conventional construction.

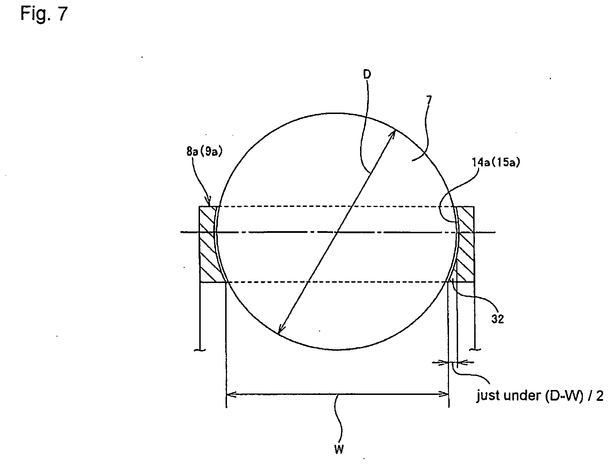

Particularly, in the case of this example, the outer ring 5c has groove shoulder sections 16a, 16b, 17a, 17b on both sides in the axial direction of the outer ring raceways 10, 11 on the large-diameter side and small-diameter side. On the other hand, the inner ring 6c only has groove shoulder sections 18a, 19a on one side in the axial direction (here "one side" in the axial direction is the left side in FIGS. 6, and 8 to 13, and conversely, the "other side" in the axial direction is the right side in FIGS. 6, and 8 to 13) of the inner ring raceways 12, 13 on the large-diameter side and small-diameter side, and there are no groove shoulder sections on the other side in the axial direction. Moreover, the cages 8a, 9a on the large-diameter side and small-diameter side hold the balls 7 in their respective pockets 14a, 15a, and are constructed such that they can prevent the balls 7 from dropping out of the pockets 14a, 15a toward at least the inner-diameter side. More specifically, as illustrated in FIG. 7, the opening width (diameter of the opening) W on the inner-diameter side of the pockets 14a, 15a of the cages 8a, 9a on the large-diameter side and small-diameter side is just a little less than the diameter D of the balls 7 (W < D). In this way, an engagement margin 32, having a width dimension that is about (D - W)/2, is formed all the way around the edge section of the opening on the inner-diameter side of the pockets 14a, 15a.

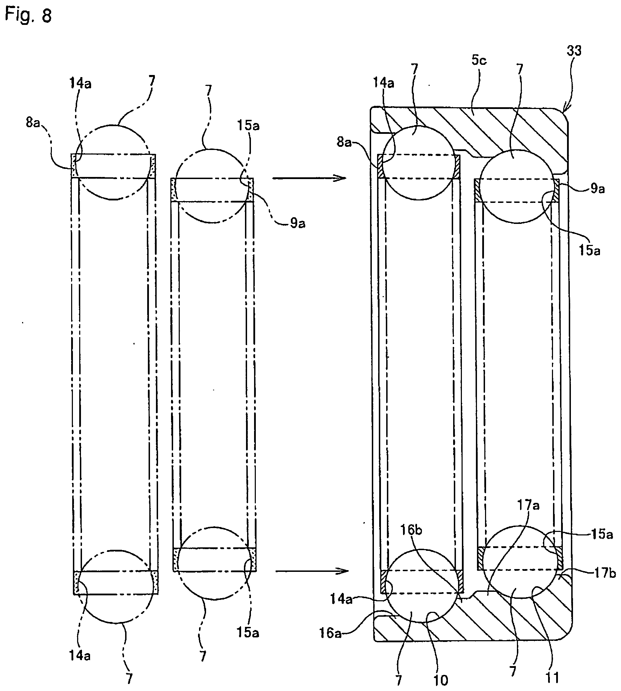

When assembling the tandem angular ball bearing that is constructed as described above, first, an outer ring side assembly 33 as illustrated by the solid line in FIG. 8 is assembled. In order to do this, first, as illustrated by the dot-dash line in FIG. 8, the balls 7 are held inside the pockets 14a, 15a of the cages 8a, 9a on the large-diameter side and small-diameter side. When the balls 7 held inside the pockets 14a of the cage 8a on the large-diameter side are located nearest to the inner-diameter side to the inner-diameter side of the cage 8a without causing the cage 8a to elastically deform, the diameter of the circumscribed line of the balls 7 is larger than at least the inner diameter of the groove shoulder sections 16a, 16b located in the portions on both sides in the axial direction of the outer ring raceway 10 on the large-diameter side. Moreover, when the balls 7 held inside the pockets 15a of the cage 9a on the small-diameter side are located nearest to the inner-diameter side of the cage 9a without causing the cage 9a to elastically deform, the diameter of the circumscribed circle of the balls 7 is larger than at least the inner diameter of the groove shoulder sections 17a, 17b located on both sides in the axial direction of the outer ring raceway 11 on the small-diameter side.

In any case, after the balls 7 are held in the pockets 14a, 15a of the cages 8a, 9a on the large-diameter side and small-diameter side, then next, the balls 7 that are held by the cages 8a, 9a on the large-diameter side and small-diameter side are inserted into the inner-diameter side of the outer ring 5c from the one side in the axial direction of the outer ring 5c. In doing so, as illustrated by the solid line in FIG. 8, the balls 7 that are held by the cages 8a, 9a on the large-diameter side and small-diameter side are assembled in the inner-diameter side of the outer ring raceways 10, 11 on the large-diameter side and small-diameter side. When doing this, the balls 7 that are held by the cages 8a, 9a on the large-diameter side and small-diameter side cause the cages 8a, 9a on the large-diameter side and small-diameter side to elastically deform, and with the diameter of the circumscribed circle of the balls reduced, the balls 7 pass over the groove shoulder sections 16a, 16b, 17a. After the balls 7 have passed over the groove shoulder sections 16a, 16b, 17a, the diameter of the circumscribed circle of the balls 7 expands as the cages 8a, 9a on the large-diameter side and small-diameter side are elastically restored, and the balls 7 are then in an assembled state in the inner-diameter side of the outer ring raceways 10, 11 on the large-diameter side and small-diameter side.

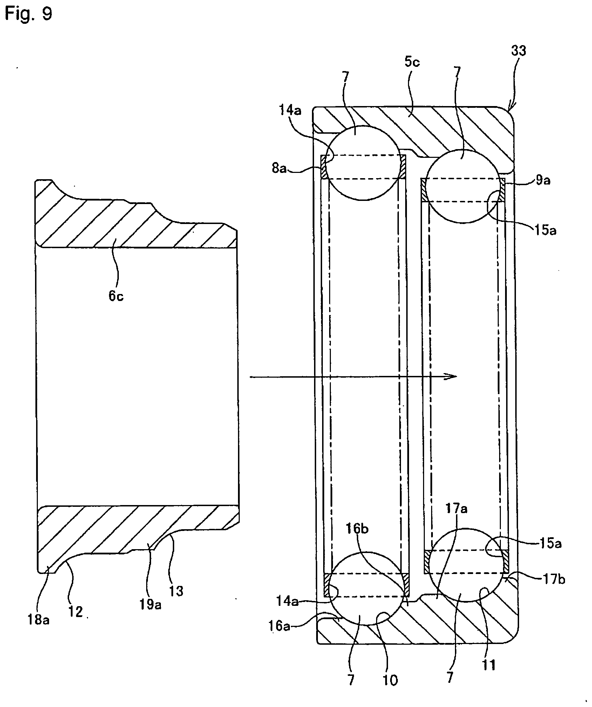

With the outer ring side assembly 33 completed in this way, the balls 7 that are held in the cages 8a, 9a on the large-diameter side and small-diameter side are prevented from dropping out of the pockets 14a, 15a of the cages 8a, 9a on the large-diameter side and small-diameter side into the inner diameter side, and the groove shoulder sections 16a, 16b, 17a, 17b prevent the balls 7 from dropping out from inside the outer ring raceways 10, 11 on the large-diameter side and small-diameter side in the axial direction. Therefore, the outer ring 5c, the cages 8a, 9a on the large-diameter side and small-diameter side, and the balls 7 can be treated as a single outer ring side assembly 33. After such an outer ring side assembly 33 has been assembled, then next, as illustrated by the arrow in FIG. 9, the inner ring 6c is inserted into the inner-diameter side of this outer ring assembly 33 from the one side in the axial direction of the outer ring assembly 33. In doing so, as illustrated in FIG. 6, by assembling the balls 7 that are held in the cages 8a, 9a on the large-diameter side and small-diameter side into the outer-diameter side of the inner ring raceways 12, 13 on the large-diameter side and small-diameter side, assembly of the tandem angular ball bearing is complete. In the case of this example, there are no groove shoulder sections in the respective portions on the other side in the axial direction of the inner ring raceways 12, 13 on the large-diameter side and small-diameter side, so the work of inserting the inner ring 6c as described above can be performed smoothly.

With the tandem angular ball bearing of this example constructed as described above, the tandem angular ball bearing is divided into and handled as two elements; an outer ring assembly 33 and an inner ring 6c. Therefore, by shipping the outer ring assembly 33 after being assembled by the bearing manufacturer, then at the assembly plant of various rotating mechanical equipment such as a differential apparatus, the work of assembling the tandem angular ball bearing where it will be used can be performed easily.

For example, when the tandem angular ball bearing of this example is used as a rolling bearing that supports the portion near the tip end of a pinion shaft (near the pinion gear) of a differential gear, with the outer ring side assembly 33 assembled, the outer ring 5 is fitted in the support hole 22 located inside the differential casing with an interference fit, and the inner ring 6c is fitted around the outside of the portion near the tip end of the pinion shaft 3 with an interference fit. In this case, the outer ring 5c can be fitted on the inside of the support hole 22 with an interference fit by pressing the surface of the end in the axial direction of the outer ring 5c. Therefore, indentations are not formed due to this fitting work in the portions of the outer ring raceways 10, 11 on the large-diameter side and small-diameter side where the balls 7 come in contact. After that, by inserting the inner ring 6c inside the inner-diameter side of the outer ring side assembly 33 as illustrated in FIG 9 described above, the tandem angular ball bearing of this example can be easily assembled between the support hole 22 and the pinion shaft 3.

Furthermore, in the case of the tandem angular ball bearing of this example, there are groove shoulder sections 16a, 16b, 7a, 17b on both sides in the axial direction of the outer ring raceways 10, 11 on the large-diameter side and small-diameter side. Therefore, for example, when using .the tandem angular ball bearing of this example in an apparatus in which lubrication oil is supplied to the bearing only during operation, such as in some differential apparatuses, it is possible to keep lubrication oil in the bottom end section of the outer ring raceways 10, 11 on the large-diameter side and small-diameter side when operation is stopped. Therefore, when restarting operation, there is good initial lubrication in both rows due to the lubrication oil that is collected in both of these bottom end sections.

### [Example of realization of the invention]

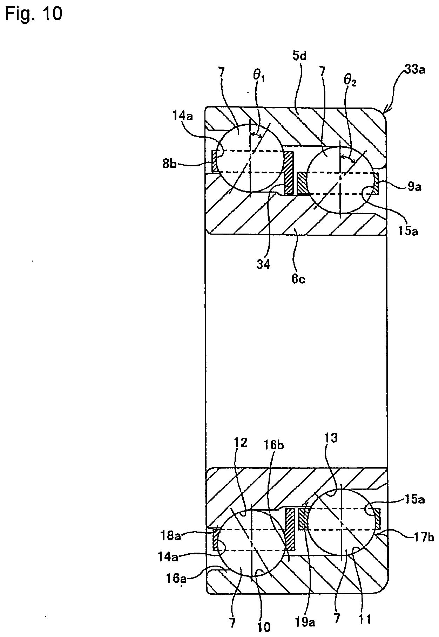

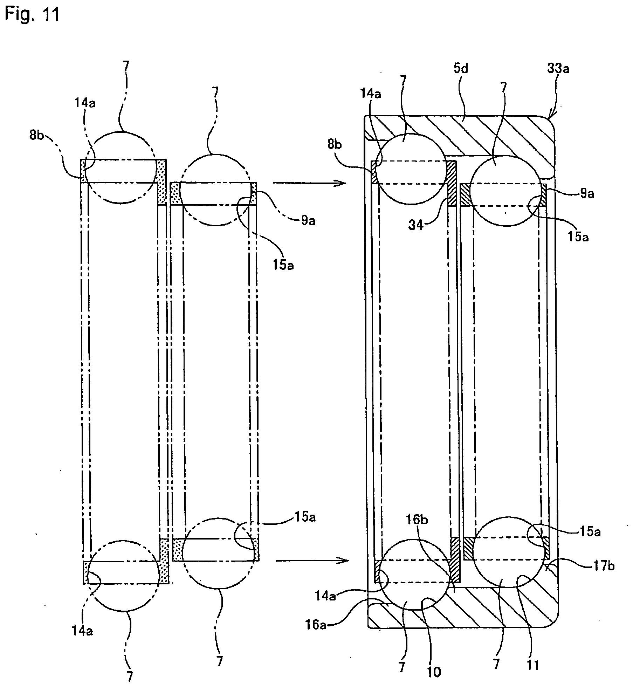

FIGS. 10 and 11 illustrate an example of realization of the invention. In the case of this example, the shape of part of the outer ring 5d and the cage 8b on the large-diameter side differs from that of the second example described above. In other words, in this outer ring 5d, groove shoulder sections 16a, 16b, 17b are formed in only the portion on both sides in the axial direction of the outer ring raceway 10 on the large-diameter side, and the portion on the other side in the axial direction of the outer ring raceway 11 on the small-diameter side, and there is no groove shoulder section in the portion on the one side in the axial direction of the outer ring raceway 11 on the small-diameter side. Moreover, in the cage 8b on the large-diameter side, a inward-looking flange shaped brim section 34 is formed on the end section of the other end in the axial direction, and the outside surface of this brim section 34 is made to face in the axial direction the surface on the one end in the axial direction of the cage 9a on the small-diameter side.

When assembling the tandem angular ball bearing of this example described above, first, an outer ring side assembly 33a is assembled as illustrated by the solid line in FIG. 11. In order to do this, first, as illustrated by the dot-dash line in FIG. 11, the balls 7 are held inside the pockets 14a, 15a of the cages 8b, 9a on the large-diameter side and small-diameter side. Next, as illustrated by the arrow in FIG. 11, the balls 7 that are held by the cages 8b, 9a on the large-diameter side and small-diameter side are inserted in the inner-diameter side of the outer ring 5d from the one side in the axial direction of the outer ring 5d. In doing so, as illustrated by the solid line in FIG. 11, the balls 7 that are held by the cages 8b, 9a on the large-diameter side and small-diameter side are assembled in the inner-diameter side of the outer ring raceways 10, 11 on the large-diameter side and small-diameter side. When doing this, the balls 7 that are held in the cage 9a on the small-diameter side can be smoothly inserted in the inner-diameter side of the outer ring raceway 11 on the small-diameter side regardless of whether there are groove shoulder sections 16a, 16b. On the other hand, the balls 7 that are held by the cage 8b on the large-diameter side cause the cage 8b on the larger-diameter side to elastically deform, and with the diameter of the circumscribed circle of the balls 7 being reduced, the balls 7 pass over the groove shoulder section 16a. After the balls 7 have passed, the diameter of the circumscribed circle of the balls 7 expands as the cage 8b on the large-diameter side is elastically restored, and the balls 7 are then in an assembled stated in the inner-diameter side of the outer ring raceway 10 on the large-diameter side.

With the outer ring side assembly 33a completed in this way, the balls 7 that are held by the cages 8b, 9a on the large-diameter side and small-diameter side are prevented from dropping out of the pockets 14a, 15a of the cages 8b, 9a on the large-diameter side and small-diameter side toward the inner-diameter side. Moreover, groove shoulder sections 16a, 16b located on both sides in the axial direction of the outer ring raceway 10 on the large-diameter side prevents the balls 7 that are held by the cage 8b on the large diameter side from dropping out in the axial direction from the inside of the outer ring raceway 10 on the large-diameter side. Furthermore, the balls 7 that are held by cage 9a on the small-diameter side are prevented from dropping out toward the one side in the axial direction from the inside of the outer ring raceway 11 on the small-diameter side by the surface on the one side in the axial direction of the cage 9a on the small-diameter side coming in contact with (engaging with) the surface on the outside of the brim section 34 of the cage 8b on the large-diameter side, and similarly, are prevented from dropping out by the groove shoulder section 17b on the other side in the axial direction of the outer ring raceway 11 on the small-diameter side. Therefore, the outer ring 5d, the cages 8b, 9a on the large-diameter side and small-diameter side and the balls 7 can be treated as a single outer ring side assembly 33a. After such an outer ring side assembly side 33a has been assembled, then next, the inner ring 6c is inserted into the inner-diameter side of the outer ring side assembly 33a from the one side in the axial direction of the outer ring side assembly 33a. In doing so, as illustrated in FIG. 10, by assembling the balls 7 that are held by the cages 8b, 9a on the large-diameter side and small-diameter side into the outer-diameter side of the inner ring raceways 12, 13 on the large-diameter side and small-diameter side, assembly of the tandem angular ball bearing is complete.

In the case of the tandem angular ball bearing of this example, constructed as described above, this tandem angular ball bearing can be divided into and handled as two elements; an outer ring assembly 33a and inner ring 6c. Therefore, by shipping the outer ring side assembly 33a after being assembled by the bearing manufacturer, at the assembly plant of various rotating mechanical equipment such as a differential apparatus, the work of assembling the tandem angular ball bearing where it will be used can be performed easily.

In the case of the tandem angular ball bearing of this example, there are groove shoulder sections 16a, 16b on both sides in the axial direction of the outer ring raceway 10 on the large-diameter side. Therefore, for example, when using the tandem angular ball bearing of this example in an apparatus in which lubrication oil is supplied to the bearing only during operation, such as in some differential apparatuses, it is possible to keep lubrication oil in the bottom end section of the outer ring raceways 10 on the large-diameter side when operation is stopped. Therefore, when restarting operation, there is good initial lubrication in both rows due to the lubrication oil that is collected in both of these bottom end sections. In other words, for the row that includes the outer ring raceway 10 on the large diameter side, it is possible to have good initial lubrication in that row due to the lubrication oil that is collected in the bottom end section of the outer ring raceway 10 on the large-diameter side. On the other hand, for the row that includes the outer ring raceway 11 on the small-diameter side, as operation is restated, part of the lubrication oil that is collected in the bottom end section of the outer ring raceway 10 on the large-diameter side is pushed to the outside by the balls 7 that roll in the outer ring raceway 10 on the large-diameter side, and due to the lubrication oil that enters into the outer ring raceway 11 on the small-diameter side, initial lubrication of that row becomes good. The other construction and function are the same as in the case of the second example described above

### [Example 3]

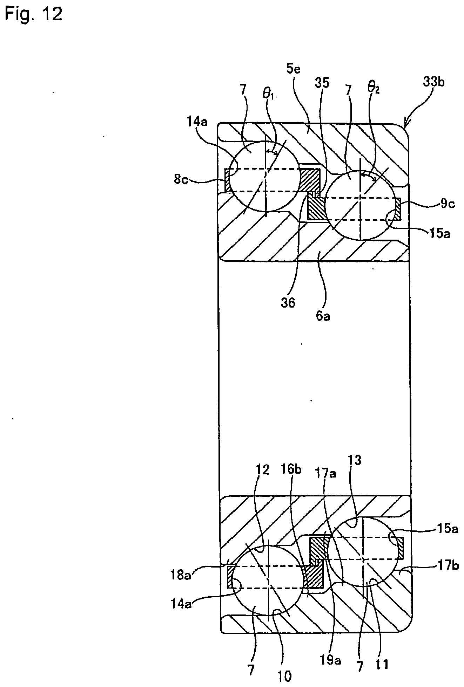

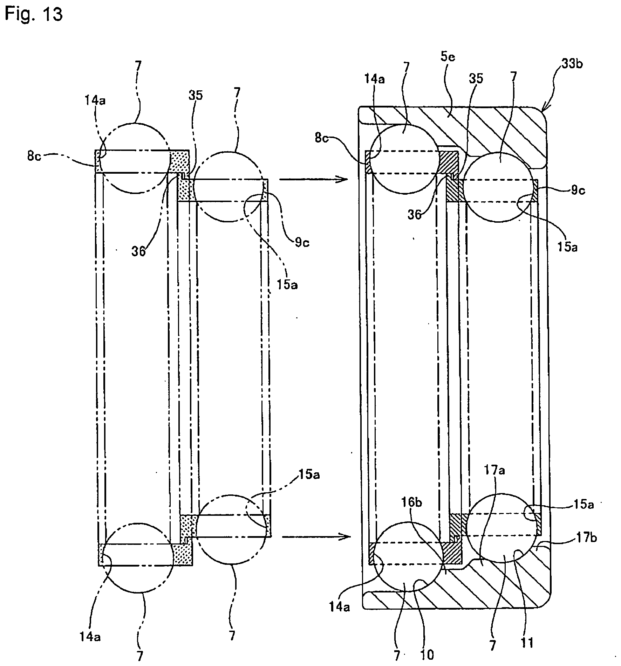

FIGS. 12 and 13 illustrate a third example important for understanding the present invention. In the case of this example, part of the shape of the outer ring 5e and the cages 8c, 9c on the large-diameter side and small-diameter side is different than that of the second example illustrated in FIGS. 6 to 9 and described above In other words, in the outer ring 5e there are groove shoulder sections 16b, 17a, 17b in only a portion on the other side in the axial direction of the outer ring raceway 10 on the large-diameter side, and in the portions on both sides in the axial direction of the outer ring raceway 11 on the small-diameter side, and there is no groove shoulder section in the portion on the one side in the axial direction of the outer ring raceway 10 on the large-diameter side. Moreover, in the cage 8c on the large-diameter side, an inward-facing engaging section 35 is formed all the way around the other end section in the axial direction of the inner peripheral surface. In addition, in the cage 9c on the small-diameter side, an outward-facing engaging section 36 is formed all the way around the one end in the axial direction of the outer peripheral surface. The outward-facing engaging section 36 and the inward-facing engaging section 35 are made to engage such that the inside surfaces of both engaging sections 35,36 face each other .

When assembling the tandem angular ball bearing of this example described above, first, as illustrated by the solid line in FIG. 13, an outer ring side assembly 33b is assembled In order to do this, first, as illustrated by the dot-dash line in FIG. 13, with the inward-facing engaging 35 of the cage 8c on the large-diameter side engaged with the outward-facing engaging section 36 of the cage 9c on the small-diameter side, the balls 7 are held inside the pockets 14a, 15a of the cages 8c, 9c on the large-diameter side and the small-diameter side Next, as illustrated by the arrow in FIG. 13, the balls 7
that are held by the cages 8c, 9c on the large-diameter side and small-diameter side are inserted into the inner-diameter side of the outer ring 5e from the one side in the axial direction of the outer ring 5e. In doing so, as illustrated by the solid line in FIG. 13, that balls 7 that are held in the cages 8c, 9c on the large-diameter side and the small-diameter side are assembled in the inner-diameter side of the outer ring raceways 10, 11 on the large-diameter side and small-diameter side. When doing this, the balls 7 that are held in the cage 9c on the small-diameter side cause the cage 9c on the small-diameter side to elastically deform, and with the diameter of the circumscribed circle of the balls 7 reduced, the balls 7 are passed over the groove shoulder section 17a. After the balls 7 have passed, the diameter of the circumscribed circle of the balls expands as the cage 9c on the small-diameter side is elastically restored, and the balls are then in an assembled state in the inner-diameter side of the outer ring raceway 11 on the small-diameter side. On the other hand, the balls 8 that are held by the cage 8c on the large-diameter side can be smoothly inserted into the inner-diameter side of the outer ring raceway 10 on the large-diameter side.

With the outer ring side assembly 33b completed in this way, the balls 7 that are held by the cages 8c, 9c on the large-diameter side and small-diameter are prevented from dropping out of the pockets 14a, 15a of the cages 8c, 9c on the large-diameter side and small-diameter side toward the inner-diameter side. Moreover, the groove shoulder sections 17a, 17b that are located on both sides in the axial direction of the outer ring raceway 11 on the small-diameter side prevent the balls 7 that are held by the cage 9c on the small-diameter side from dropping out in the axial direction from the inside of the outer ring raceway 11 on the small-diameter side. Furthermore, the balls 7 that are held by the cage 8c on the large-diameter side are prevented from dropping out toward the one side in the axial direction from inside the outer ring raceway 10 on the large-diameter side by the inward-facing engaging section 35 of the cage 8c on the large-diameter side and the outward-facing engaging section 36 of the cage 9c on the small-diameter side engaging with each other, and similarly are prevented from dropping out toward the other side in the axial direction by the groove shoulder section 16b that is located on the other side in the axial direction of the outer ring raceway 10 on the large-diameter side. Therefore, the outer ring 5e, the cages 8c, 9c on the large-diameter side and small-diameter side and the balls 7 can be treated as a single outer ring side assembly 33b. After such an outer ring side assembly 33b has been assembled, then next, the inner ring 6a is inserted into the inner-diameter side of the outer ring side assembly 33b from the one side in the axial direction of the outer ring side assembly 33b. In doing so, as illustrated in FIG. 12, by assembling the balls 7 that are held by the cages 8c, 9c on the large-diameter side and small-diameter side on the outer-diameter side of the inner ring raceways 10, 11 on the large-diameter side and small diameter side, assembly of the tandem angular ball bearing is complete.

In the case of the tandem angular ball bearing of this example, constructed as described above, this tandem angular ball bearing can be divided into and handled as two elements; an outer ring assembly 33b and inner ring 6a. Therefore, by shipping the outer ring side assembly 33b after being assembled by the bearing manufacturer, at the assembly plant of various rotating mechanical equipment such as a differential apparatus, the work of assembling the tandem angular ball bearing where it will be used can be performed easily.

Moreover, in the case of the tandem angular ball bearing of this example, groove shoulder sections 17a, 17b are formed on both sides in the axial direction of the outer ring raceway 11 on the small-diameter side. Therefore, for example, when using the tandem angular ball bearing of this example in an apparatus in which lubrication oil is supplied to the bearing only during operation, such as in some differential apparatuses, it is possible to keep lubrication oil in the bottom end section of the outer ring raceway 11 on the small-diameter side when operation is stopped. Therefore, when restarting operation, there is good initial lubrication in both rows due to the lubrication oil that is collected in both of these bottom end sections. In other words, for the row that includes the outer ring raceway 11 on the small diameter side, it is possible to have good initial lubrication in that row due to the lubrication oil that is collected in the bottom end section of the outer ring raceway 11 on the small-diameter side. On the other hand, for the row that includes the outer ring raceway 10 on the large-diameter side, as operation is restated, part of the lubrication oil that is collected in the bottom end section of the outer ring raceway 11 on the small-diameter side is pushed to the outside by the balls 7 that roll in the outer ring raceway 11 on the small-diameter side, and due to the lubrication oil that enters into the outer ring raceway 10 on the large-diameter side, initial lubrication of that row becomes good. The other construction and function are the same as in the case of the second example illustrated in FIGS. 6 to 9 and described above.

In each of the examples described above, cages, the main section thereof, or in other words, the section that holds the balls thereof being a cylindrical shape, are used as the cages on the large-diameter side and small-diameter side. However, when embodying the present invention, it is also possible to use cages, the main section thereof not being a cylindrical shape; for example a partial conical shape, can also be used as the cages on the large-diameter side and small-diameter side.

### [Industrial Applicability]

The present invention can be applied to a tandem angular ball bearing for supporting a rotating shaft that rotates in a state of both a radial load and thrust load being applied, and can be assembled in various kinds of rotating mechanical equipment and not limited to apparatuses assembled in automobile drive systems such as a differential gear or transfer apparatus of an automobile. Moreover, except for the cases that are particularly indicated, the order of assembly is not limited to the example illustrated in the figures, and as disclosed in Patent Document 3 described above, with the balls and cages being assembled around the outer diameter side of the inner ring, the inner ring can be securely fitted around a rotating shaft such as a pinion shaft, after which the outer ring that has been securely fitted around a housing for example, can be assembled around the balls. Furthermore, the balls can be assembled together with the cages to the race tracks on the inner-diameter side or outer diameter side after the race tracks of the outer ring or inner ring have been securely fitted with the engaging member.

### [Reference Numbers]

- 1, 1a: Ball bearing
- 2: Ball bearing
- 3, 3a: Pinion shaft
- 4: Pinion gear
- 5, 5a to 5e: Outer ring
- 6, 6a to 6c: Inner ring
- 7: Balls
- 8, 8a to 8c: Large-diameter side cage
- 9, 9a, 9c: Small-diameter side cage
- 10: Large-diameter side outer ring raceway
- 11: Small-diameter side outer ring raceway
- 12: Large-diameter side inner ring raceway
- 13: Small-diameter side inner ring raceway
- 14, 14a: Pockets
- 15,15a: Pockets
- 16a, 16b: Groove shoulder section
- 17a, 17b: Groove shoulder section
- 18a, 18b: Groove shoulder section
- 19a, 19b: Groove shoulder section
- 21, 21a: Support section
- 22, 22a: Support hole
- 23: End surface
- 24: End surface
- 25a to 25j: Corner section

## Claims

1. A tandem angular ball bearing comprising:
an outer ring (5d) having a large-diameter side outer ring raceway (10) having a relatively large diameter on one side in the axial direction of the inner peripheral surface thereof, and similarly a small-diameter side outer ring raceway (11) having a relatively small diameter on the other side in the axial direction;
an inner ring (6c) having a large-diameter side inner ring raceway (12) having a relatively large diameter on one side in the axial direction of the outer peripheral surface thereof, and similarly a small-diameter side inner ring raceway (13) having a relatively small diameter on the other side in the axial direction;
a large-diameter side cage (8b) having a relatively large diameter and having pockets (14a) in a plurality of locations in the circumferential direction thereof;
a small-diameter side cage (9a) having a relatively small diameter and having pockets (15a) in a plurality of locations in the circumferential direction thereof
a plurality of balls (7) that form a large-diameter side ball row and that are held in the pockets (14a) of the large-diameter side cage (8b) so that they freely roll between the large-diameter side outer ring raceway (10) and large-diameter side inner ring raceway (12); and
a plurality of balls (7) that form a small-diameter side ball row and that are held in the pockets (15a) of the small-diameter side cage (9a) so that they freely roll between the small-diameter side outer ring raceway (11) and small-diameter side inner ring raceway (13); and
contact angles (θ₁, θ₂) in the same direction being applied to the balls (7) that form the large-diameter side ball row, and to the balls that form the small-diameter side ball row;
**characterized in that**
the outer ring (5d) comprises groove shoulder sections (16a, 16b, 17b) in the portion on both sides in the axial direction of the large-diameter side outer ring raceway (10), and in the portion on the other side in the axial direction of the small-diameter side outer ring raceway (11), and does not comprise a groove shoulder section in the portion on the one side in the axial direction of the small-diameter side outer ring raceway (11);
the inner ring (6c) comprises groove shoulder sections (18a, 19a) in the portion on the one side in the axial direction of the large-diameter side inner ring raceway (12), and in the portion on the one side in the axial direction of the small-diameter side inner ring raceway (13), and does not comprise groove shoulder sections in the portion on the other side in the axial direction of the large-diameter side inner ring raceway (12), and in the portion on the other side in the axial direction of the small-diameter side inner ring raceway (13);
the diameter of the opening on the inner-diameter side of the pockets (14a, 15a) of the large-diameter side cage (8b) and small-diameter side cage (9a) is less than the diameter of the balls (7), such that, with the balls (7) held in the pockets (14a, 15a), the large-diameter side cage (8b) and small-diameter side cage (9a9, 9a-9c) can prevent the balls (7) from dropping out of the pockets (14a, 15a) into the inner-diameter side; and
the large-diameter side cage (8b) has an inward-looking flange shaped brim section (34) that is formed on the end section of the other end in the axial direction of the large-diameter side cage (8b), and when an outer ring side assembly is made by combining the outer ring (5d), large-diameter side cage (8b), small-diameter side cage (9a) and the balls (7) with the same positional relationship as the completed state as a ball bearing, the outside surface of the brim section (34) is made to face in the axial direction the surface on the one end in the axial direction of the small-diameter side cage (9a).

2. The tandem angular ball bearing according to claim 1 that together with supporting a rotating shaft of a mechanical apparatus that is assembled in a power transmission system of an automobile such that the rotating shaft rotates freely, is used for supporting loads in both the radial and axial directions that act on the rotating shaft.

## Patentansprüche

1. Tandem-Schrägkugellager, umfassend:
einen Außenring (5d) mit einer Außenringlaufbahn (10) der Seite mit großem Durchmesser, die einen relativ großen Durchmesser auf einer Seite in axialer Richtung ihrer Innenumfangsfläche aufweist, und in ähnlicher Weise eine Außenringringlaufbahn (11) der Seite mit kleinem Durchmesser, die einen relativ kleinen Durchmesser auf der anderen Seite in axialer Richtung aufweist;
einen Innenring (6c) mit einer Innenringlaufbahn (12) der Seite mit großem Durchmesser, die einen relativ großen Durchmesser auf einer Seite in axialer Richtung ihrer Außenumfangsfläche aufweist, und in ähnlicher Weise eine Innenringlaufbahn (13) der Seite mit kleinem Durchmesser, die einen relativ kleinen Durchmesser auf der anderen Seite in axialer Richtung aufweist;
einen Käfig (8b) der Seite mit großem Durchmesser, der einen relativ großen Durchmesser aufweist und Taschen (14a) an mehreren Stellen in dessen Umfangsrichtung aufweist;
einen Käfig (9a) der Seite mit kleinem Durchmesser, der einen relativ kleinen Durchmesser aufweist und Taschen (15a) an mehreren Stellen in dessen Umfangsrichtung aufweist;
mehrere Kugeln (7), die eine Kugelreihe der Seite mit großem Durchmesser bilden und in den Taschen (14a) des Käfigs (8b) der Seite mit großem Durchmesser gehalten sind, so dass sie frei zwischen der Außenringlaufbahn (10) der Seite mit großem Durchmesser und der Innenringlaufbahn (12) der Seite mit großem Durchmesser rollen; und
mehrere Kugeln (7), die eine Kugelreihe der Seite mit kleinem Durchmesser bilden und in den Taschen (15a) des Käfigs (9a) der Seite mit kleinem Durchmesser gehalten sind, so dass sie frei zwischen der Außenringlaufbahn (11) der Seite mit kleinem Durchmesser und der Innenringlaufbahn (13) der Seite mit kleinem Durchmesser rollen; und wobei
Kontaktwinkel (θ1, θ2) in der gleichen Richtung auf die Kugeln (7) angewendet werden, welche die Kugelreihe der Seite mit großem Durchmesser bilden, und auf die Kugeln, welche die Kugelreihe der Seite mit kleinem Durchmesser bilden;
**dadurch gekennzeichnet, dass**
der Außenring (5d) Nutenschulterabschnitte (16a, 16b, 17b) in dem Abschnitt auf beiden Seiten in axialer Richtung der Außenringlaufbahn (10) der Seite mit großem Durchmesser und in dem Abschnitt auf der anderen Seite in axialer Richtung der Außenringlaufbahn (11) der Seite mit kleinem Durchmesser umfasst und keinen Nutenschulterabschnitt in dem Abschnitt auf der einen Seite in axialer Richtung der Außenringlaufbahn (11) der Seite mit kleinem Durchmesser umfasst;
der Innenring (6c) Nutenschulterabschnitte (18a, 19a) in dem Abschnitt auf der einen Seite in axialer Richtung der Innenringlaufbahn (12) der Seite mit großem Durchmesser und in dem Abschnitt auf der einen Seite in der Axialrichtung der Innenringlaufbahn (13) der Seite mit kleinem Durchmesser aufweist, und keine Nutenschulterabschnitte in dem Abschnitt auf der anderen Seite in axialer Richtung der Innenringlaufbahn (12) der Seite mit großem Durchmesser und in dem Abschnitt auf der anderen Seite in axialer Richtung der Innenringlaufbahn (13) der Seite mit kleinem Durchmesser aufweist; wobei
der Durchmesser der Öffnung auf der Innendurchmesserseite der Taschen (14a, 15a) des Käfigs (8b) der Seite mit großem Durchmesser und des Käfigs (9a) der Seite mit kleinem Durchmesser geringer ist als der Durchmesser der Kugeln (7), so dass bei in den Taschen (14a, 15a) gehaltenen Kugeln (7) der Käfig (8b) der Seite mit großem Durchmesser und der Käfig (9a9, 8a-9c) der Seite mit kleinem Durchmesser verhindern kann, dass die Kugeln (7) aus den Taschen (14a, 15a) in die Innendurchmesserseite fallen; und
der Käfig (8b) der Seite mit großem Durchmesser einen nach innen weisenden flanschförmigen Randabschnitt (34) aufweist, der an dem Endabschnitt des anderen Endes in axialer Richtung des Käfigs (8b) der Seite mit großem Durchmesser ausgebildet ist, und wenn eine außenringseitige Anordnung durch Kombinieren des Außenrings (5d), des Käfigs (8b) der Seite mit großem Durchmesser, des Käfigs (9a) der Seite mit kleinem Durchmesser und der Kugeln (7) mit der gleichen Positionsbeziehung wie im fertigen Zustand als Kugellager hergestellt ist, die Außenfläche des Randabschnitts (34) dahingehend hergestellt ist, in der axialen Richtung auf die Oberfläche auf dem einen Ende in der axialen Richtung des Käfigs (9a) der Seite mit kleinem Durchmesser zu weisen.

2. Tandem-Schrägkugellager nach Anspruch 1, welches, zusammen mit dem Stützen einer Drehwelle einer mechanischen Vorrichtung, die in einem Kraftübertragungssystem eines Kraftfahrzeugs derart montiert ist, dass sich die Drehwelle frei dreht, verwendet wird, um Lasten in radialer und axialer Richtung zu stützen, die auf die rotierende Welle wirken.

## Revendications

1. Roulement à billes de type angulaire en tandem comprenant :
une bague externe (5d) ayant un chemin de roulement de bague externe coté grand diamètre (10) ayant un diamètre relativement grand sur un côté dans la direction axiale de la surface périphérique externe de celui-ci, et de façon similaire un chemin de roulement de bague externe côté petit diamètre (11) ayant un diamètre relativement petit sur l'autre côté dans la direction axiale :
une bague interne (6c) ayant un chemin de roulement de bague interne côté grand diamètre (12) ayant un diamètre relativement grand sur un côté dans la direction axiale de la surface périphérique externe de celui-ci, et de façon similaire un chemin de roulement de bague interne côté petit diamètre (13) ayant un diamètre relativement petit sur l'autre côté dans la direction axiale ;
une cage latérale de grand diamètre (8b) ayant un diamètre relativement grand et ayant des poches (14a) dans une pluralité d'emplacements dans la direction circonférentielle de celle-ci ;
une cage latérale de petit diamètre (9a) ayant un diamètre relativement petit et ayant des poches (15a) dans une pluralité d'emplacements dans la direction circonférentielle de celle-ci ;
une pluralité de billes (7) qui forment une rangée de billes latérales de grand diamètre et qui sont maintenues dans les poches (14a) de la cage latérale de grand diamètre (8b) de telle sorte qu'elles peuvent rouler librement entre le chemin de roulement de bague externe côté grand diamètre (10) et le chemin de roulement de bague interne côté grand diamètre (12) ;
une pluralité de billes (7) qui forment une rangée de billes latérales de petit diamètre et qui sont maintenues dans les poches (15a) de la cage latérale de petit diamètre (9a) de telle sorte qu'elles peuvent rouler librement entre le chemin de roulement de bague externe côté petit diamètre (11) et le chemin de roulement de bague interne côté petit diamètre (13) ; et
des angles de contact (θ₁, θ₂) dans la même direction étant appliqués aux billes (7) qui forment la rangée de billes latérales de grand diamètre, et aux billes qui forment la rangée de billes latérales de petit diamètre ;
**caractérisé en ce que**
la bague externe (5d) comprend des sections épaulement de rainure (16a, 16b, 17b) dans la partie sur les deux côtés dans la direction axiale du chemin de roulement de bague externe côté grand diamètre (10), et dans la partie sur l'autre côté dans la direction axiale du chemin de roulement de bague externe côté petit diamètre (11), et ne comprend pas de section épaulement de rainure dans la partie sur le un côté dans la direction axiale du chemin de roulement de bague externe côté petit diamètre (11) ;
la bague interne (6c) comprend des sections épaulement de rainure (18a, 19a) dans la partie sur le un côté dans la direction axiale du chemin de roulement de bague interne côté grand diamètre (12), et dans la partie sur le un côté dans la direction axiale du chemin de roulement de bague interne côté petit diamètre (13), et ne comprend pas de sections épaulement de rainure dans la partie sur l'autre côté dans la direction axiale du chemin de roulement de bague interne côté grand diamètre (12), et dans la partie sur l'autre côté dans la direction axiale du chemin de roulement de bague interne côté petit diamètre (13) ;
le diamètre de l'ouverture sur le côté diamètre interne des poches (14a, 15a) de la cage latérale de grand diamètre (8b) et de la cage latérale de petit diamètre (9a) est inférieur au diamètre des billes (7) de telle sorte que lorsque les billes (7) sont maintenues dans les poches (14a, 15a), la cage latérale de grand diamètre (8b) et la cage latérale de petit diamètre (9a9, 9a-9c) peuvent empêcher les billes (7) de tomber des poches (14a, 15a) dans le côté petit diamètre ; et
la cage latérale de grand diamètre (8b) a une bride tournée vers l'intérieur en forme de section bord (34) qui est formée sur la section extrémité de l'autre extrémité dans la direction axiale de la cage latérale de grand diamètre (8b), et lorsqu'un ensemble latéral bague externe est formé en combinant la bague externe (5d), la cage latérale de grand diamètre (8b), la cage latérale de petit diamètre (9a) et les billes (7) avec la même relation de position que l'état terminé sous forme de roulement à billes, la surface externe de la section bord (34) est conçue pour faire face dans la direction axiale à la surface sur l'une extrémité dans la direction axiale de la cage latérale de petit diamètre (9a).

2. Roulement à billes de type angulaire en tandem selon la revendication 1, qui tout en supportant un arbre rotatif d'un appareil mécanique qui est assemblé dans un système de transmission de puissance d'une voiture de telle sorte que l'arbre rotatif pivote librement, est utilisé pour supporter des charges dans les directions radiale et axiale qui agissent sur l'arbre rotatif.
